Europäisches Patentamt

European Patent Office

Office européen des brevets

(19)

(11) EP 1 395 008 A1

(12) EUROPÄISCHE PATENTANMELDUNG

(43) Veröffentlichungstag:
03.03.2004 Patentblatt 2004/10

(51) Int Cl.⁷: H04L 25/03

(21) Anmeldenummer: 02019588.9

(22) Anmeldetag: 02.09.2002

(84) Benannte Vertragsstaaten:
AT BE BG CH CY CZ DE DK EE ES FI FR GB GR
IE IT LI LU MC NL PT SE SK TR
Benannte Erstreckungsstaaten:
AL LT LV MK RO SI

(72) Erfinder:
• Nottensteiner, Hans
81543 München (DE)
• Rademacher, Leo, Dr.
83607 Holzkirchen (DE)

(71) Anmelder: SIEMENS AKTIENGESELLSCHAFT
80333 München (DE)

(54) **Gemeinsame Detektion zweier Signale**

(57) Eine Empfangssignalsequenz, die eine erste über einen ersten Kanal übertragene Datenfolge und eine zweite über einen zweiten Kanal übertragene Datenfolge enthält, wird über parallele Zweige, die jeweils einen Kanalschätzer (3,4) und ein Vorfilter (7,8), das den ersten bzw. zweiten Kanal minimalphasig macht, umfassen, einer Prozessoreinheit (10) zugeführt, in der die erste Datenfolge und die zweite Datenfolge in einem suboptimalen Detektionsverfahren geschätzt werden. Dazu werden für die erste Datenfolge eine erste Metrik und für die zweite Datenfolge eine zweite Metrik verwendet, die jeweils die unterschiedlichen Übertragungsbedingungen im ersten und zweiten Kanal und die unterschiedliche Filterung in den Vorfiltern (7,8) berücksichtigen.

FIG 2

EP 1 395 008 A1

**Beschreibung**

Funkkommunikationssysteme dienen der Übertragung von Informationen, Sprache oder Daten, mit Hilfe von elektromagnetischen Wellen über eine Funkschnittstelle zwischen einer sendenden und einer empfangenden Funkstation. Ein Beispiel für ein Funkkommunikationssystem ist das bekannte GSM-Mobilfunknetz, dessen Architektur zum Beispiel in B. Walke, Mobilfunknetze und ihre Protokolle, Band 1, Teubner-Verlag Stuttgart, 1998, Seite 139 bis 151 beschrieben ist. Dabei ist zur Übertragung eines Teilnehmersignals jeweils ein durch einen schmalbandigen Frequenzbereich und einen Zeitschlitz gebildeter Kanal vorgesehen. Da sich ein Teilnehmersignal in einem Kanal in Frequenz und Zeit von den übrigen Teilnehmersignalen unterscheidet, kann die empfangende Funkstation eine Detektion der Daten des Teilnehmersignals vornehmen. In neueren Funkkommunikationssystemen, wie zum Beispiel dem UMTS-System, werden die einzelnen Teilnehmer darüber hinaus durch unterschiedliche Spreizcodes unterschieden.

Ein Funkkommunikationssystem, zum Beispiel ein GSM-Mobilfunknetz, umfasst eine Vielzahl von Mobilvermittlungsstellen, die untereinander vernetzt sind, beziehungsweise, die den Zugang zu einem Festnetz herstellen. Ferner sind die Mobilvermittlungsstellen mit jeweils einer oder mehreren Basisstationssteuerungen verbunden. Die Basisstationssteuerung ermöglicht eine Verbindung zu mindestens einer Basisstation und nimmt die Verwaltung der funktechnischen Ressourcen der angeschlossenen Basisstationen vor. Eine solche Basisstation ist eine Sende-/Empfangseinheit, die über eine Funkschnittstelle, auch Luftschnittstelle genannt, eine Funkverbindung zu Mobilstationen aufbauen kann.

Ein Gebiet, das von einem Funkkommunikationssystem abgedeckt wird, wird in einzelne Funkzonen, die auch als Zellen bezeichnet werden, aufgeteilt. Eine Zelle wird dabei von einer der Basisstationen bedient, über die Funkverbindungen von Mobilstationen, die sich in dieser Zelle aufhalten, aufgebaut werden. Um Störungen von Funkverbindungen in benachbarten Zellen zu vermeiden, wird jeder Zelle eine Untermenge von physikalischen Kanälen, die in dem Funkkommunikationssystem zur Verfügung stehen, zugewiesen. Direkt benachbarte Zellen verwenden im Allgemeinen unterschiedliche Frequenzkanäle, über die Funkverbindungen zwischen einer Mobilstation und einer Basisstation aufgebaut werden. Erst in einem gewissen Abstand zweier Zellen zueinander werden Frequenzkanäle erneut verwendet. Um die Kapazität der Funkkommunikationssysteme zu erhöhen, wird dieser Abstand, der auch als Reuse-Abstand bezeichnet wird, soweit möglich verringert.

Signale, die über denselben Frequenzkanäle in unterschiedlichen Zellen übertragen werden, müssen bei der Datendetektion unterschieden werden. Dabei wird oft von Nutzsignal und Interferenzsignal gesprochen. Als Interferenzsignal wird das Signal bezeichnet, das in einer entfernteren Zelle über denselben Frequenzkanäle übertragen wird, in der betrachteten Zelle jedoch lediglich als Störung wahrgenommen wird. Das Interferenzsignal kann Beiträge von mehreren Zellen enthalten.

Dasselbe Problem tritt bei Funkkommunikationssystemen auf, in denen Kanäle durch unterschiedliche Spreizcodes unterschieden werden. In diesem Fall werden die Signale mit derselben Frequenz übertragen, so dass die unterschiedlichen Kanäle ebenfalls gleichzeitig detektiert werden müssen.

Die Fähigkeit eines Empfängers, unterschiedliche Signalanteile innerhalb eines Kanals zu detektieren, begrenzt die Kapazität eines Funkkommunikationssystems.

Aus "Technique for cochannel interference suppression in TDMA mobile radio systems", S.W.Wales, IEE Proc.-Commun., Vol. 142, No. 2, April 1995 und "Interference Canceling Equalizer (ICE) for Mobile Radio Communication", Hitoshi Yoshino, IEEE Trans. on vehicular Technology, Vol. 46, No. 4, November 1997, sind Verfahren zur Interferenzunterdrückung in einem Kanal (cochannel interference cancellation) bei der gemeinsamen Detektion (Joint Detection) eines Nutzsignals und eines Interferenzsignales bekannt. Dabei wird eine gemeinsamen Maximum Likelihood-Detektion vorgenommen. Diese wird im Sinne eines Viterbi-Algorithmus durchgeführt. Der Viterbi-Algorithmus wird zum Beispiel in J. Huber, Trelliscodierung, Springerverlag, Seite 102 - 105 beschrieben. Mit zunehmender Zustandszahl steigt der Rechenaufwand für den Viterbi-Algorithmus überproportional.

Der Erfindung liegt das Problem zugrunde, ein Verfahren und eine Vorrichtung zur empfängerseitigen Datendetektion anzugeben, bei dem der erforderliche Rechenaufwand verringert werden kann.

Dieses Problem wird erfindungsgemäß gelöst durch ein Verfahren gemäß Anspruch 1, sowie eine Vorrichtung gemäß Anspruch 8. Weitere Ausgestaltungen der Erfindung gehen aus den Unteransprüchen hervor.

Zur empfangsseitigen Datendetektion einer Empfangssignalsequenz, die mindestens eine erste Datenfolge und eine zweite Datenfolge enthält, wobei die erste Datenfolge über einen ersten Kanal und die zweite Datenfolge über einen zweiten Kanal übertragen wird, wird eine erste Kanalimpulsantwort für den ersten Kanal und eine zweite Kanalimpulsantwort für den zweiten Kanal geschätzt. Ausgehend von der ersten Kanalimpulsantwort werden erste Vorfilterkoeffizienten eines ersten Vorfilters bestimmt, so dass die Verknüpfung der ersten Kanalimpulsantwort mit dem ersten Vorfilterkoeffizienten eine erste minimalphasige Kanalimpulsantwort des ersten Kanals ergibt. Ausgehend von der zweiten Kanalimpulsantwort werden zweite Vorfilterkoeffizienten eines zweiten Vorfilters bestimmt, so dass die Verknüpfung der zweiten Kanalimpulsantwort mit den zweiten Vorfilterkoeffizienten eine zweite minimalphasige Kanalimpulsantwort des zweiten Kanals ergibt. Aus der Eingangssignalsequenz wird durch Verknüpfung mit der ersten minimalphasigen Kanalimpulsantwort eine erste Sequenz und durch Verknüpfung mit der zweiten minimalphasigen Kanalimpulsantwort eine zweite Sequenz gebildet.

Anschließend werden die erste Datenfolge und/oder die zweite Datenfolge in einem suboptimalen Detektionsverfahren geschätzt. Als suboptimales Detektionsverfahren wird ein Detektionsverfahren bezeichnet, das den Viterbi-Algorithmus nicht exakt berechnet, sondern eine Sequenzschätzung mit Zustandsreduktion, eine sequentielle Decodierung oder einen Selektionsalgorithmus durchführt. Derartige suoboptimale Detektionsverfahren werden zum Beispiel in J. Huber, Trelliscodierung, Springerverlag, Seite 106 - 126 beschrieben.

Zur Schätzung der ersten und/oder zweiten Datenfolge wird in einem ersten Entscheidungszweig zur Bewertung der ersten Sequenz und eine erste Metrik verwendet, die zur Bewertung eines auf die erste Datenfolge zurückgehenden ersten Signalanteils eine mit der ersten minimalphasigen Kanalimpulsantwort verknüpfte mögliche erste Empfangsfolge und zur Bewertung eines auf die zweite Datenfolge zurückgehenden zweiten Signalanteils eine mit der zweiten Kanalimpulsantwort und den ersten Vorfilterkoeffizienten verknüpfte mögliche zweite Empfangsfolge berücksichtigt. In einem zweiten Entscheidungszweig wird zur Bewertung der zweiten Sequenz eine zweite Metrik verwendet, die zur Bewertung des ersten Signalanteils die mit der ersten Kanalimpulsantwort und den zweiten Vorfilterkoeffizienten verknüpfte erste mögliche Empfangsfolge und zur Bewertung des zweiten Signalsanteils die mit der zweiten minimalphasigen Kanalimpulsantwort verknüpfte zweite mögliche Empfangsfolge berücksichtigt.

In dem Verfahren werden die auf die ersten Datenfolge und die zweite Datenfolge zurückgehenden Anteile in der Empfangssignalsequenz separat verarbeitet. Bei der Schätzung der Datenfolge im ersten und zweiten Entscheidungszweig wird dann in den verwendeten unterschiedlichen Metriken berücksichtigt, dass der jeweilige Signalanteil durch den anderen Signalanteil gestört wird. Dieses wird dadurch berücksichtigt, dass beispielsweise in der ersten Metrik für den ersten Signalanteil die erste minimalphasige Kanalimpulsantwort verwendet wird, für den zweiten Signalanteil jedoch die Verknüpfung aus der zweiten Kanalimpulsantwort und den ersten Vorfilterkoeffizienten. Damit wird berücksichtigt, dass auf der Übertragungsstrecke zwischen Sender und Empfänger der auf die zweite Datenfolge zurückgehende Signalanteil entsprechend den Verhältnissen des zweiten Kanals verändert wird, und dass andererseits beim Durchgang durch das erste Vorfilter zur Bildung der ersten Sequenz der zweite Signalanteil entsprechend den ersten Vorfilterkoeffizienten verändert wird. Analoges gilt für die zweite Metrik.

Vorzugsweise wird die erste Datenfolge und die zweite Datenfolge jeweils mit Hilfe einer Entscheidung mit Zuverlässigkeitsinformation (Soft Division) bestimmt. Die Zuverlässigkeitsinformation wird dann jeweils aus der zugehörigen Metrik abgeleitet, dass heisst, für die erste Datenfolge aus der ersten Metrik und für die zweite Datenfolge aus der zweiten Metrik.

Die Ableitung der ersten und zweiten Sequenz aus der Eingangssignalsequenz, erlaubt den Einsatz von Detektionsverfahrenmit Zustandsreduktion(englisch: Reduced state sequence estimation). Dadurch wird der Rechenaufwand bei der Schätzung der ersten und/oder zweiten Datenfolge deutlich reduziert.

Vorzugsweise wird ein Detektionsverfahren verwendet, das zur Entscheidungsfindung mögliche Zustandsübergänge von einer gegenüber der maximalen Anzahl möglicher Zustände reduzierten Anzahl Zustände betrachtet. Bei der Berechnung der ersten Metrik und der zweiten Metrik werden dann jedoch alle möglichen Zustände berücksichtigt. Vorzugsweise wird ein sogenannter Decision Feedback-Algorithmus verwendet, bei dem zur Berechnung der Metrik in vorherigen Schritten ermittelte Werte für die Zustände verwendet werden.

Es liegt im Rahmen der Erfindung, das Verfahren mit einem Entscheidungsalgorithmus durchzuführen, der zur Entscheidungsfindung alle möglichen Zustände betrachtet, der jedoch nur eine eingeschränkte Anzahl möglicher Zustandsübergänge weiterverfolgt. Ein solcher Algorithmus ist beispielsweise unter der Bezeichnung "M-Algorithmus" bekannt (siehe zum Beispiel J. Huber, Trelliscodierung, Springerverlag, S. 124 - 126). Der Rechenaufwand wird hier dadurch eingeschränkt, dass nur eine eingeschränkte Anzahl möglicher Zustandsübergänge weiterverfolgt wird.

Zum Einsatz in einem Funkkommunikationssystem, in dem unterschiedliche Modulationsschemata zulässig sind, wie zum Beispiel EDGE, ist es vorteilhaft, aus der Eingangssignalsequenz ein ersten Modulationsschema, das bei der Übertragung der ersten Datenfolge eingesetzt wurde, und ein zweites Modulationsschema, das bei der Übertragung der zweiten Datenfolge verwendet wurde, zu schätzen. Das erste Modulationsschema und das zweite Modulationsschema werden bei der Anwendung des Entscheidungsalgorithmus berücksichtigt.

Es liegt ferner im Rahmen der Erfindung, eine senderseitige Rotation der ersten Datenfolge und der zweiten Datenfolge, wie sie beispielsweise bei der GSMK-Modulation oder der 8-PSK-Modulation üblich ist, bei der Berechnung der ersten Metrik und der zweiten Metrik zu berücksichtigen.

Eine Vorrichtung zur empfangsseitigen Datendetektion umfasst einen ersten Kanalschätzer und einen zweiten Kanalschätzer, die so ausgestaltet sind, dass die ersten Kanalimpulsantwort und die zweite Kanalimpulsantwort geschätzt werden. Ferner umfasst die Vorrichtung ein erstes Vorfilter und ein zweites Vorfilter, die jeweils die erste Sequenz und die zweite Sequenz erzeugen. In einer Prozessoreinheit werden schließlich die erste Datenfolge und/oder die zweite Datenfolge in einem suboptimalen Detektionsverfahren geschätzt.

Es liegt im Rahmen der Erfindung, zur Berechnung erster Vorfilterkoeffizienten für das erste Vorfilter und zweiten Vorfilterkoeffizienten für das zweite Vorfilter ferner eine erste Einheit zur Berechnung der ersten Vorfilterkoeffizienten für das erste Vorfilter und eine zweite Einheit zur Berechnung der zweiten Vorfilterkoeffizienten für das zweite Vorfilter vorzusehen.

Zur Schätzung der verwendeten Modulationsschemata liegt es im Rahmen der Erfindung, dass die Vorrichtung darüber hinaus eine erste Einheit zur Modulationserkennung, in der das erste Modulationsschema geschätzt wird, und eine zweite Einheit zur Modulationserkennung, in der das zweite Modulationsschema geschätzt wird, umfasst. In einer Einheit zur Bestimmung von Parametern zur Konfiguration des Entscheidungsalgorithmus, der eine Information über das erste Modulationsschema und das zweite Modulationsschema zugeführt wird, werden die für den angewandten Entscheidungsalgorithmus erforderlichen Parameter bestimmt und an die Prozessoreinheit weitergeleitet.

Im Folgenden wird die Erfindung anhand der Figuren, in denen Ausführungsbeispiele dargestellt sind, näher erläutert.

Das Verfahren und die Vorrichtung der empfangsseitigen Datendetektion ist sowohl zur Interferenzunterdrückung in einem Interference-Cancellation-Verfahren, als auch zur gleichzeitigen Detektion zweier Signale geeignet. Im Falle der Interferenzunterdrückung stellt eine der beiden Datenfolgen die störende Interferenz dar. Das Verfahren und die Vorrichtung zur empfangsseitigen Datendetektion ist in allen Kommunikationssystemen einsetzbar, in denen das Problem zweier überlagerter Datenfolgen in einer Empfangssignalsequenz auftritt. Es ist insbesondere bei EDGE zur Interferenzunterdrückung und bei UMTS zur gemeinsamen Detektion (Joint Detection) geeignet. Das Verfahren und die Vorrichtung können analog auf die Detektion von mehr als zwei Datenfolgen erweitert werden.

Figur 1 zeigt ein Trellis-Diagramm für ein Maximum Likelihood-Verfahren zur gleichzeitigen Detektion von zwei Signalen mit L=2, M=2.

Figur 2 zeigt ein Blockdiagramm für eine Vorrichtung zur empfangsseitigen Datendetektion.

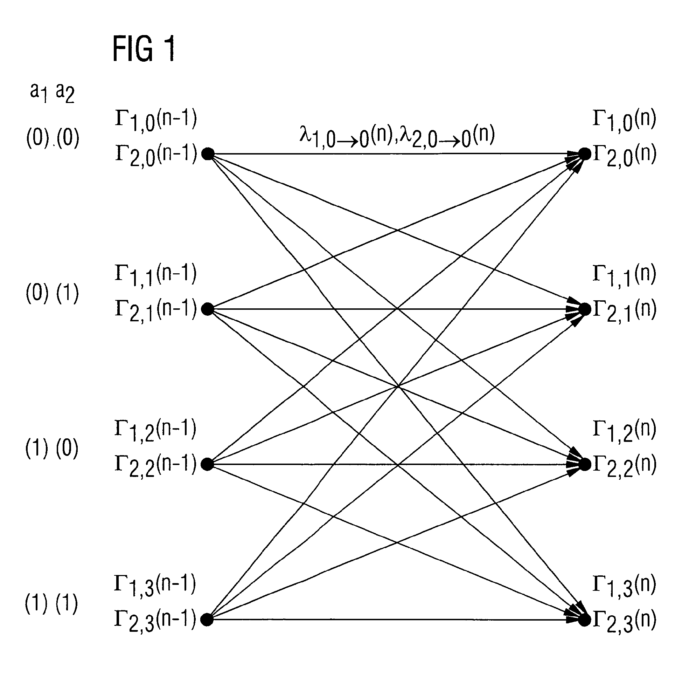

In einem Trellis-Diagramm (siehe Figur 1) sind für zwei Signale A1, A2, die gemeinsam detektiert werden, die möglichen Werte dargestellt. Jedes der Signale A1, A2 kann den Wert 1 oder 0 annehmen. Für die Kombination ergeben sich somit die vier möglichen Werte 00, 01, 10, 11. In dem Trellis-Diagramm werden diese möglichen Zustände $\Gamma_{ij}(n-1)$ und davon ausgehende mögliche Zustandsübergänge $\lambda_{i,j \rightarrow k}(n)$ zu den möglichen Zuständen $\Gamma_{i,k}(n)$ mit i=1,2; j,k=0,1,2,3 dargestellt. Zu jedem möglichen Zustand $\Gamma_{i,j}(n-1)$ wird analysiert, wie sich der Übergang des einen oder anderen Signals A1, A2 auf 0 oder 1 auswirken würde.

In jedem Zustand $\Gamma_{i,k}(n)$ werden alle ankommenden Zustandsübergänge $\lambda_{i,j \rightarrow k}(n)$ bezüglich ihres Abstands zu der tatsächlich beobachteten Signalsequenz bewertet. Dazu wird üblicherweise eine Metrik eingesetzt. Unter den verschiedenen ankommenden Zustandsübergängen $\lambda_{i,j \rightarrow k}(n)$ wird derjenige ausgewählt, der gemäß der Metrik den geringsten Abstand zur beobachteten Signalsequenz aufweist.

Die Komplexität des Trellis-Diagramms ist abhängig von der Größe des bei dem verwendeten Modulationsschema auftretenden Modulationsalphabets M. Für eine GMSK-Modulation ist M=2, für eine 8PSK-Modulation ist M=8. Ferner hängt die Komplexität des Trellis-Diagramms davon ab, wieviele Signalanteile L (Diese Signalanteile werden im Englischen als Channel Taps bezeichnet.) eine Signalsequenz auf Grund der Kanaleigenschaften aufweist. Diese Signalanteile L kommen durch unterschiedliche Ausbreitungswege des Signals zustande. In dem in Figur 1 dargestellten Trellis-Diagramm wurde L=2 und M=2 angenommen. Die Anzahl $N_s$ der Zustände in dem Trellis-Diagramm beträgt

$$N_s = M^{2(L-1)}$$

Somit gilt für Figur 1 $N_s$=4.

In praktischen Beispielen, zum Beispiel bei GMSK-Modulation mit M=2 und einer Anzahl L der Signalanteile von 4, ergibt sich eine Anzahl der zu betrachtenden Zustände von $N_s$=64. Für eine 8PSK-Modulation, wie zum Beispiel bei EDGE verwendet, steigt die Anzahl $N_s$ auf $8^{2(4-1)}$=262144. Trellis-Diagramme mit derartig hohen Zustands zahlen lassen sich praktisch nicht mehr exakt behandeln.

Um in diesem Fall die Komplexität des Trellis-Diagramms zu reduzieren, kann zum Einen in einem sogenannten Decision Feedback-Verfahren (DFSE) die Anzahl der betrachteten Zustände reduziert werden, oder in einem sogenannten M-Algorithmus die Anzahl der betrachteten Zustandsübergänge. Voraussetzung dafür ist, dass die in der Metrik verwendete Signalsequenz Ergebnis eines minimalphasigen Kanals ist. In einer solchen Signalsequenz nimmt der Beitrag der aufeinanderfolgenden Signalanteile ab. Das heisst, die zuerst auftretenden Signalanteile liefern den größten Beitrag zum Signal. Bei Betrachtung derartiger Signalsequenzen können sequentielle Entscheidungsalgorithmen mit reduzierter Zustandszahl oder reduzierten Zustandsübergängen eingesetzt werden.

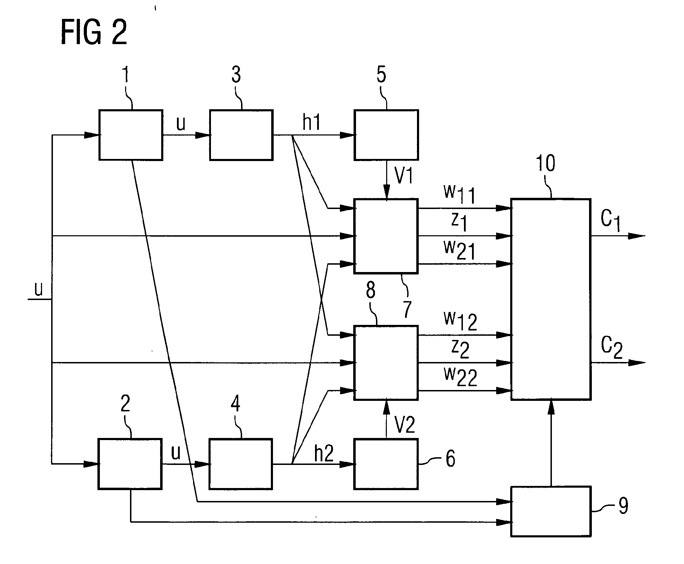

Eine Eingangssignalsequenz u, die eine erste Datenfolge, die über einen ersten Kanal übertragen wird, und eine zweite Datenfolge, die über einen zweiten Kanal übertragen wird, enthält, wird auf den Eingang einer ersten Einheit 1 zur Modulationserkennung und auf den Eingang einer zweiten Einheit 2 zur Modulationserkennung gegeben (siehe Figur 2). In der ersten Einheit 1 zur Modulationserkennung wird das bei der Übertragung über den ersten Kanal eingesetzte Modulationsschema geschätzt. In der zweiten Einheit 2 zur Modulationserkennung wird das bei der Übertragung über den zweiten Kanal verwendete Modulationsschema geschätzt.

Die Schätzung des Modulationsschemas erfolgt zum Beispiel dadurch, dass zunächst eine senderseitig vorgenommene Rotation des Signals rückgängig gemacht wird, eine Kanalschätzung durchgeführt wird und eine Signal-zu-Störverhältnis-Schätzung durchgeführt wird. Diese Schätzung erfolgt für die bei unterschiedlichen, bekannten Modulationsschemata verwendeten Signalrotationen. Es werden die Signal-zu-Störverhältnisse verglichen und es wird angenommen, dass dasjenige Modulationsschema, für das sich das beste Signal-zu-Störverhältnis ergibt, das Richtige ist.

Anschließend wird die Signalsequenz u einem ersten Kanalschätzer 3 und einem zweiten Kanalschätzer 4 zugeführt. In dem Kanalschätzer 3 wird eine erste Kanalimpulsantwort $h_1$ für den ersten Kanal, in dem zweiten Kanalschätzer 4 wird eine zweite Kanalimpulsantwort für den zweiten Kanal geschätzt. Ein Verfahren zur Kanalschätzung ist zum Beispiel aus K. D. Kammeyer, Nachrichtenübertragung, Teubner Verlag Stuttgart,1992, S. 586 - 588 bekannt.

Die erste Kanalimpulsantwort $h_1$ wird einer ersten Einheit 5 zur Berechnung erster Vorfilterkoeffizienten zugeführt, in der die ersten Vorfilterkoeffizienten $v_1$ so berechnet werden, dass mit den ersten Vorfilterkoeffizienten $v_1$ aus der Eingangssequenz u eine erste Sequenz $z_1$ erzeugt wird.

Entsprechend wird die zweite Kanalimpulsantwort $h_2$ einer zweiten Einheit 6 zur Berechnung zweiter Vorfilterkoeffizienten zugeführt, in der zweite Vorfilterkoeffizienten $v_2$ berechnet werden. Die Anwendung der zweiten Vorfilterkoeffizienten $v_2$ auf die Eingangssignalsequenz u erzeugt eine zweite Sequenz $z_2$.

Es ist ein erstes Vorfilter 7 und ein zweites Vorfilter 8 vorgesehen. Dem ersten Vorfilter 7 wird die Eingangssignalsequenz u, die erste Kanalimpulsantwort $h_1$, die zweite Kanalimpulsantwort $h_2$ und die ersten Kanalkoeffizienten $v_1$ zugeführt.

Dem zweiten Vorfilter 8 werden die Eingangssignalsequenz u, die erste Kanalimpulsantwort $h_1$, die zweite Kanalimpulsantwort $h_2$ und die zweiten Vorfilterkoeffizienten $v_2$ zugeführt.

Verfahren zur Berechnung der Vorfilterkoeffizienten sind beispielsweise aus W. H. Gerstacker, J. Huber "Improved equalization for GSM mobile communications" Proc. Int. Conf. Telecommunications, ICT 96 Istanbul 128 April 96 bekannt.

In dem ersten Vorfilter 7 wird die erste Sequenz $Z_1$ gefiltert:

$$z_1(n) = u(n)*v_1(n).$$

In dem zweiten Vorfilter 8 wird entsprechend die zweite Sequenz $Z_2$ gefiltert:

$$z_2(n) = u(n) * v_2(n).$$

Der Filtervorgang wird dabei jeweils durch den Faltungsoperator * dargestellt.

Ferner wird in dem ersten Vorfilter 7 eine erste minimalphasige Kanalimpulsantwort

$$w_{11}(n) = h_1(n) * v_1(n),$$

eine Verknüpfung der zweiten Kanalimpulsantwort mit den ersten Vorfilterkoeffizienten $v_1$ gebildet:

$$w_{21}(n) = h_2(n)*v_1(n)$$

Entsprechend wird in dem zweiten Vorfilter 8 eine Verknüpfung der ersten Kanalimpulsantwort $h_1$ und den zweiten Vorfilterkoeffizienten $v_2$

$$w_{12}(n) = h_1(n) * v_2(n).$$

und eine minimalphasige Kanalimpulsantwort

$$W_{22}(n) = h_2(n) * v_2(n)$$

gebildet.

Einer Prozessoreinheit 10 werden von dem ersten Vorfilter 7 die erste Datensequenz $z_1$, die erste minimal-

phasige Kanalimpulsantwort $w_{11}$ und die Verknüpfung $w_{21}$ aus zweiter Kanalimpulsantwort $h_2$ und ersten Vorfilterkoeffizienten $v_1$ zugeführt. Von dem zweiten Vorfilter 8 wird der Prozessoreinheit 10 die zweite Sequenz $z_2$, die Verknüpfung $w_{12}$ aus erster Kanalimpulsantwort $h_1$ und zweiten Vorfilterkoeffizienten $v_2$ und die zweite minimalphasige Kanalimpulsantwort $w_{22}$ zugeführt.

Eine Information über die von der ersten Einheit 1 zur Modulationserkennung beziehungsweise der zweiten Einheit 2 zur Modulationserkennung geschätzten im ersten beziehungsweise zweiten Kanal verwendeten Modulationsschemata werden einer Einheit 9 zur Trellis-Konfiguration zugeführt. In der Einheit 9 zur Trellis-Konfiguration werden Parameter zur Konfiguration eines Trellis-Verfahrens, das in der Prozessoreinheit 10 durchgeführt wird, bestimmt und der Prozessoreinheit 10 zugeführt. In der Prozessoreinheit 10 werden die erste Datenfolge und die zweite Datenfolge in einem suboptimalen Detektionsverfahren geschätzt. Dazu wird ein Trellis-Diagramm für eine reduzierte Zustandsanzahl analysiert.

Die Bewertung erfolgt in getrennten Entscheidungszweigen für die erste Sequenz $z_1$ und die zweite Sequenz $z_2$. Zur Bewertung der betrachteten Zustandsübergänge wird in dem ersten Entscheidungszweig eine erste Metrik

$$\lambda_{1,i\rightarrow j}(n) = \| z_1(n) - w_{11}(n)\, x_1\, r_1(n) - w_{21}(n)\, x_2 r_2(n) \|^2$$

und in dem zweiten Entscheidungszweig eine zweite Metrik

$$\lambda_{2,i\rightarrow j}(n) = \| z_2(n) - w_{12}(n)\, x_1\, r_1(n) - w_{22}(n)\, x_2\, r_2(n) \|^2$$

verwendet. Dabei ist $\mathbf{w}_{xy}(n)$, $x = 1,2$, $y = 1,2$ ein Zeilenvektor mit L Elementen, $\mathbf{x}_1$ ein Spaltenvektor mit L Modulationssymbolen der ersten Datenfolge, $\mathbf{x}_2$ ein Spaltenvektor mit L Modulationssymbolen der zweiten Datenfolge und $r_{1,2}(n)$ ein Rotationsfaktor, der sendeseitig zur Signalrotation verwendet wurde. Der Rotationsfaktor $r_{1,2}(n)$ wird in der Einheit 9 zur Trelliskonfiguration auf der Basis der geschätzten Modulationsschemata ermittelt.

Für den Rotationsfaktor gilt im Fall einer GMSK-Modulation

$$r_{1,2}(n) = e^{jn\pi/2}$$

und im Fall einer 8PSK-Modulation

$$r_{1,2}(n) = e^{jn\pi/8}$$

Das Trellis-Diagramm wird im Sinne eines Decision Feedback-Verfahrens (DFSE) zur Zustandsreduktion bearbeitet. Dazu wird der Vektor $\mathbf{x}$ in zwei Teile aufgespalten:

$$x^T = [x_1 \,..\, x_R \; x_{R+1} \,..\, x_L]$$

Nur die ersten R Symbole, wobei R<L, beschreiben den Zustandsübergang im Trellis-Diagramm. Die übrigen L-R-Symbole werden von vorherigen Pfadentscheidungen übernommen und bei der Berechnung der ersten Metrik beziehungsweise der zweiten Metrik berücksichtigt.

In dem Trellis-Diagramm werden zu jedem Zustand j zwei der $M^2$ zusammenlaufenden möglichen Zustandsübergänge ausgewählt. Es wird derjenige, der gemäß der ersten Metrik den geringsten Abstand zur ersten Sequenz $z_1$ aufweist ausgewählt

$$\Gamma_{1,i}(n-1) + \lambda_{1,ij}(n) = \min_i \left( \Gamma_{1,i}(n-1) + \lambda_{1,ij}(n) \right)$$

Und, es wird derjenige, der gemäß der zweiten Metrik den geringsten Abstand zur zweiten Sequenz $z_2$ aufweist, ausgewählt

$$\Gamma_{2,\hat{k}}(n-1) + \lambda_{2,\hat{k}j}(n) = \min_{k}(\Gamma_{2,k}(n-1) + \lambda_{2,kj}(n))$$

$\Gamma_{m,k}(n\text{-}1)$ ist die jeweils aufsummierte Metrik der vorherigen Zustände.

Jede Auswahl eines Zustandsübergangs entspricht einer Symbolentscheidung für die erste Datenfolge und die zweite Datenfolge, die durch den Zustand vorgegeben wird, von dem der ausgewählte Zustandsübergang ausgeht. Der erste ausgewählte Zustandsübergang kommt von einem Zustand $\hat{i}$, der zweite ausgewählte Zustandsübergang von einem Zustand $k$. Der Zustand $\hat{i}$ wird beschrieben durch r-1 Datensymbole der ersten Datenfolge und r-1 Datensymbole der zweiten Datenfolge. Entsprechend wird der Zustands $k$ beschrieben durch r-1 Datensymbole der ersten Datenfolge und r-1 Datensymbole der zweiten Datenfolge. Der wahrscheinlichste Zustandsübergang für die erste Datenfolge und die zweite Datenfolge wird mit Hilfe der ersten Metrik beziehungsweise der zweiten Metrik ermittelt auf der Basis der ersten Sequenz und der zweiten Sequenz. Daher werden die geschätzten Symbole der ersten Datenfolge als erste Datenfolge und die geschätzten Datensymbole der zweiten Datenfolge als zweite Datenfolge angenommen. Diese Symbolentscheidung wird im Zustand $j$ gespeichert. Die entsprechenden Modulationssymbole werden in die Berechnung der ersten Metrik und der zweiten Metrik in den folgenden Trellisschritten übergeleitet.

Auf dieselbe Weise erfolgt die Berechnung einer Zuverlässigkeitsinformation zur Entscheidung. Diese Zuverlässigkeitsinformation wird häufig als Soft Decision bezeichnet. Dabei wird die Zuverlässigkeitsinformation zur Schätzung der ersten Datenfolge auf der Basis der ersten Metrik unter Verwendung der ersten Sequenz verwendet. Die Zuverlässigkeitsinformation zur Schätzung der zweiten Datenfolge wird auf Basis der zweiten Metrik unter Verwendung der zweiten Sequenz bestimmt.

Da die Modulationsschemata im ersten Kanal und im zweiten Kanal unabhängig voneinander geschätzt werden, kann die Eingangssignalsequenz unterschiedlich modulierte Datenfolgen enthalten.

Die erste Datenfolge und die zweite Datenfolge können Nutzdaten und Interferenzdaten sein, sie können auch Nutzdaten zweier unabhängiger Teilnehmer sein.

Am Ausgang der Prozessoreinheit 10 liegen die Schätzung $C_1$ für die ersten Datenfolge und die Schätzung $C_2$ für die zweite Datenfolge an.

**Patentansprüche**

**1.** Verfahren zur empfangsseitigen Datendetektion,

- bei dem für eine Empfangssignalsequenz, die mindestens eine erste Datenfolge, die über einen ersten Kanal übertragen wird, und eine zweite Datenfolge, die über einen zweiten Kanal übertragen wird, enthält, eine erste Kanalimpulsantwort für den ersten Kanal und eine zweite Kanalimpulsantwort für den zweiten Kanal geschätzt wird,
- bei dem ausgehend von der ersten Kanalimpulsantwort erste Vorfilterkoeffizienten eines ersten Vorfilters bestimmt werden, so dass die Filterung der Empfangssignalsequenz mit den ersten Vorfilterkoeffizienten eine erste minimalphasige Kanalimpulsantwort des ersten Kanals ergibt,
- bei dem ausgehend von der zweiten Kanalimpulsantwort zweite Vorfilterkoeffizienten eines zweiten Vorfilters bestimmt werden, so dass die Filterung der Empfangssignalsequenz mit den zweiten Vorfilterkoeffizienten eine zweite minimalphasige Kanalimpulsantwort des zweiten Kanals ergibt,
- bei dem aus der Eingangssignalsequenz durch Verknüpfung mit den ersten Vorfilterkoeffizienten eine erste Sequenz und durch Verknüpfung mit dem zweiten Vorfilterkoeffizienten eine zweite Sequenz gebildet werden,
- bei der die erste Datenfolge und/oder die zweite Datenfolge in einem suboptimalen Detektionsverfahren geschätzt werden,
- wobei in einem ersten Entscheidungszweig die erste Sequenz zugrundegelegt wird und in dem ersten Entscheidungszweig eine erste Metrik verwendet wird, in der zur Bewertung eines auf die erste Datenfolge zurückgehenden ersten Signalanteils eine mit der ersten minimalphasigen Kanalimpulsantwort verknüpfte mögliche erste Empfangsfolge und zur Bewertung eines auf die zweite Datenfolge zurückgehenden zweiten Signalanteils eine mit der zweiten Kanalimpuls und den ersten Vorfilterkoeffizienten verknüpfte mögliche zweite Empfangsfolge berücksichtigt wird,
- wobei in einem zweiten Entscheidungszweig die zweite Sequenz zugrundegelegt wird und in dem zweiten Entscheidungszweig eine zweite Metrik verwendet wird, in der zur Bewertung des ersten Signalanteils die mit der ersten Kanalimpulsantwort und den zweiten Vorfilterkoeffizienten verknüpfte erste mögliche Empfangsfolge und zur Bewertung des zweiten Signalanteils die mit der zweiten minimalphasigen Kanalimpulsantwort verknüpfte zweite mögliche Empfangsfolge berücksichtigt wird.

2. Verfahren nach Anspruch 1,
bei dem die erste Datenfolge mit Hilfe einer Entscheidung mit Zuverlässigkeitsinformation bestimmt wird, wobei die Zuverlässigkeitsinformation aus der ersten Metrik abgeleitet wird.

3. Verfahren nach Anspruch 1 oder 2,
bei dem die zweite Datenfolge mit Hilfe einer Entscheidung mit Zuverlässigkeitsinformation bestimmt wird, wobei die Zuverlässigkeitsinformation aus der zweiten Metrik abgeleitet wird.

4. Verfahren nach einem der Ansprüche 1 bis 3,

- bei dem ein Entscheidungsalgorithmus verwendet wird, der zur Entscheidungsfindung mögliche Zustandsübergänge von einer gegenüber der maximalen Anzahl möglicher Zustände reduzierten Anzahl Zustände betrachtet,
- bei dem bei der Berechnung der ersten Metrik und der zweiten Metrik alle möglichen Zustände berücksichtigt werden.

5. Verfahren nach einem der Ansprüche 1 bis 3,
bei dem ein Entscheidungsalgorithmus verwendet wird, der zur Entscheidungsfindung alle möglichen Zustände betrachtet, der jedoch nur eine eingeschränkte Anzahl möglicher Zustandsübergänge weiterverfolgt.

6. Verfahren nach einem der Ansprüche 1 bis 5,

- bei dem aus der Eingangssignalsequenz ein erstes Modulationsschema, das bei der Übertragung der ersten Datenfolge eingesetzt wurde, und ein zweites Modulationsschema, das bei der Übertragung der zweiten Datenfolge verwendet wurde, geschätzt werden,
- bei dem das erste Modulationsschema und das zweite Modulationsschema bei der Anwendung des Entscheidungsalgorithmus berücksichtigt werden.

7. Verfahren nach einem der Ansprüche 1 bis 6,
bei dem eine senderseitige Rotation der ersten Datenfolge und der zweiten Datenfolge bei der Berechnung der ersten Metrik und der zweiten Metrik berücksichtigt wird.

8. Vorrichtung zur empfangsseitigen Datendetektion,

- mit einem ersten Kanalschätzer, in dem für eine Empfangssignalsequenz, die eine erste Datenfolge, die über einen ersten Kanal übertragen wurde, und eine zweite Datenfolge, die über einen zweiten Kanal übertragen wurde, enthält, eine erste Kanalimpulsantwort für den ersten Kanal geschätzt wird,
- mit einem zweiten Kanalschätzer, in dem für die Eingangssignalsequenz eine zweite Kanalimpulsantwort für den zweiten Kanal geschätzt wird,
- mit einem ersten Vorfilter und einem zweiten Vorfilter, denen jeweils die Empfangssignalsequenz, die erste Kanalimpulsantwort und die zweite Kanalimpulsantwort zugeführt wird, wobei das erste Vorfilter eine erste Sequenz und das zweite Vorfilter eine zweite Sequenz erzeugt,
- mit einer Prozessoreinheit, in der die erste Datenfolge und/oder die zweite Datenfolge in einem suboptimalen Detektionsverfahren geschätzt werden, wobei in einem ersten Entscheidungszweig zur Bewertung der ersten Sequenz eine erste Metrik verwendet wird, in der zur Bewertung eines auf die erste Datenfolge zurückgehenden ersten Signalanteils eine mit der ersten minimalphasigen Kanalimpulsantwort verknüpfte mögliche erste Empfangsfolge und zur Bewertung eines auf die zweite Datenfolge zurückgehenden zweiten Signalanteils eine mit der zweiten Kanalimpulsantwort und den ersten Vorfilterkoeffizienten verknüpfte mögliche zweite Empfangsfolge berücksichtigt wird,
- wobei in einem zweiten Entscheidungszweig zur Bewertung der zweiten Sequenz eine zweite Metrik verwendet wird, in der zur Bewertung des ersten Signalanteils die mit der ersten Kanalimpulsantwort und den zweiten Vorfilterkoeffizienten verknüpfte erste mögliche Empfangsfolge und zur Bewertung des zweiten Signalanteils die mit der zweiten minimalphasigen Kanalimpulsantwort verknüpfte zweite mögliche Empfangsfolge berücksichtigt wird.

9. Vorrichtung nach Anspruch 8,

- mit einer ersten Einheit zur Berechnung erster Vorfilterkoeffizienten für das erste Vorfilter, der die erste Kanalimpulsantwort zugeführt wird,
- mit einer zweiten Einheit zur Berechnung zweiter Vorfilterkoeffizienten für das zweite Vorfilter, der die zweite Kanalimpulsantwort zugeführt wird.

10. Vorrichtung nach Anspruch 8 oder 9,

- mit einer ersten Einheit zur Modulationserkennung, der die Eingangssignalsequenz zugeführt wird, und die ein erstes Modulationsschema schätzt, mit dem die erste Datenfolge übertragen wurde,
- mit einer zweiten Einheit zur Modulationserkennung, der die Eingangssignalsequenz zugeführt wird, und die ein zweites Modulationsschema schätzt, mit dem die zweite Datenfolge übertragen wurde,
- mit einer Einheit zur Bestimmung von Parametern zur Konfiguration des Entscheidungsalgorithmus, der eine Information über das erste Modulationsschema und das zweite Modulationsschema zugeführt wird, und die die Parameter zur Komfiguration des Entscheidungsalgorithmus der Prozessoreinheit zuführt.

# FIG 1

$a_1 \; a_2$

$(0) \; (0)$    $\Gamma_{1,0}(n-1)$     $\lambda_{1,0\to 0}(n), \lambda_{2,0\to 0}(n)$     $\Gamma_{1,0}(n)$
       $\Gamma_{2,0}(n-1)$                           $\Gamma_{2,0}(n)$

$(0) \; (1)$    $\Gamma_{1,1}(n-1)$                             $\Gamma_{1,1}(n)$
       $\Gamma_{2,1}(n-1)$                            $\Gamma_{2,1}(n)$

$(1) \; (0)$    $\Gamma_{1,2}(n-1)$                             $\Gamma_{1,2}(n)$
       $\Gamma_{2,2}(n-1)$                            $\Gamma_{2,2}(n)$

$(1) \; (1)$    $\Gamma_{1,3}(n-1)$                             $\Gamma_{1,3}(n)$
       $\Gamma_{2,3}(n-1)$                            $\Gamma_{2,3}(n)$

FIG 2

# EP 1 395 008 A1

**Europäisches Patentamt**

## EUROPÄISCHER RECHERCHENBERICHT

Nummer der Anmeldung

EP 02 01 9588

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 99 05833 A (ERICSSON) 4. Februar 1999 (1999-02-04) * Abbildungen 6,9 * * Seite 7, Zeile 24 - Zeile 30 * * Seite 8, Zeile 9 - Zeile 17 * --- | 1,8 | H04L25/03 |
| A | ARSLAN ET AL.: "Adjacent channel interference suppression in FDMA/TDMA mobile radio systems using joint demodulation" IEEE INTERNATIONAL CONFERENCE ON COMMUNICATIONS, 7. - 11. Juni 1998, Seiten 723-727, XP000890968 New York, US * Abbildung 3 * * Seite 725, linke Spalte, Absatz 3 * --- | 1,8 | |
| A | WO 99 05832 A (ERICSSON) 4. Februar 1999 (1999-02-04) * Abbildung 4 * * Seite 7, Zeile 5 - Zeile 9 * * Seite 7, Zeile 27 - Zeile 29 * ----- | 1,8 | |

**RECHERCHIERTE SACHGEBIETE (Int.Cl.7)**

H04L

Der vorliegende Recherchenbericht wurde für alle Patentansprüche erstellt

| Recherchenort | Abschlußdatum der Recherche | Prüfer |
|---|---|---|
| DEN HAAG | 24. Januar 2003 | Scriven, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..............................................................................
& : Mitglied der gleichen Patentfamilie, übereinstimmendes Dokument

EPO FORM 1503 03.82 (P04C03)

12

**ANHANG ZUM EUROPÄISCHEN RECHERCHENBERICHT
ÜBER DIE EUROPÄISCHE PATENTANMELDUNG NR.**                    EP 02 01 9588

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-01-2003

| Im Recherchenbericht angeführtes Patentdokument | Datum der Veröffentlichung | Mitglied(er) der Patentfamilie | | Datum der Veröffentlichung |
|---|---|---|---|---|
| WO 9905833 A | 04-02-1999 | US | 6108517 A | 22-08-2000 |
| | | AU | 8585398 A | 16-02-1999 |
| | | BR | 9810839 A | 25-07-2000 |
| | | CN | 1265797 T | 06-09-2000 |
| | | EP | 1000490 A1 | 17-05-2000 |
| | | JP | 2001511623 T | 14-08-2001 |
| | | WO | 9905833 A1 | 04-02-1999 |
| WO 9905832 A | 04-02-1999 | US | 6137843 A | 24-10-2000 |
| | | AU | 8585298 A | 16-02-1999 |
| | | EP | 1000489 A1 | 17-05-2000 |
| | | JP | 2001511622 T | 14-08-2001 |
| | | WO | 9905832 A1 | 04-02-1999 |

EPO FORM P0461

Für nähere Einzelheiten zu diesem Anhang : siehe Amtsblatt des Europäischen Patentamts, Nr.12/82